# EUROPÄISCHE PATENTSCHRIFT

(11) **EP 1 907 726 B1**
(45) Veröffentlichungstag und Bekanntmachung des Hinweises auf die Patenterteilung: **14.01.2009**
(21) Anmeldenummer: 06776102.3
(22) Anmeldetag: 30.06.2006
(51) Int. Cl.: F16G 15/04

(54) **KLAUE, INSBESONDERE VERKÜRZUNGSKLAUE**
CLAW, IN PARTICULAR SHORTENING CLAW
GRIFFE, EN PARTICULIER GRIFFE DE RACCOURCISSEMENT

(30) Priorität: 23.07.2005 DE 102005035375
(43) Veröffentlichungstag der Anmeldung: 09.04.2008
(73) Patentinhaber: RuD Ketten Rieger & Dietz GmbH u. Co. KG, 73432 Aalen-Unterkochen (DE)
(72) Erfinder: SMETZ, Reinhard, 86732 Öttingen (DE); BETZLER, Michael, 73430 Aalen (DE)
(74) Vertreter: Grünecker, Kinkeldey, Stockmair & Schwanhäusser Anwaltssozietät
(86) Internationale Anmeldenummer: PCT/EP2006/006362
(87) Internationale Veröffentlichungsnummer: WO 2007/012375

(56) Entgegenhaltungen:
- EP-A2- 0 071 566
- CH-A- 469 579
- DE-A1- 2 728 791
- DE-A1- 3 922 304
- DE-A1- 4 302 641
- DE-U1- 8 903 377
- US-A- 4 330 990

## Beschreibung

### Technisches Gebiet

Die Erfindung betrifft eine Klaue, insbesondere Verkürzungsklaue für Kettenstränge mit einem Grundkörper, der eine mit einem Schlitz versehene Tasche zur Aufnahme eines Kettengliedes aufweist, an das sich ein im Bereich des Schlitzes zu liegen kommendes weiteres Kettenglied anschließt, dem ein in einer den Schlitz schneidenden Bohrung angeordnetes Sicherungselement zugeordnet ist, das ein ungewolltes Herausrutschen der in der Tasche und im Schlitz angeordneten Kettenglieder aus der Tasche und dem Schlitz verhindert.

### Stand der Technik

Eine Klaue der vorstehenden Art ist aus der EP 0 736 150 B1 bekannt. Bei der bekannten Klaue besteht das Sicherungselement aus einem Verriegelungsbolzen, der gegen die Wirkung einer Feder aus einer Sperrstellung in eine Freigabestellung überführbar ist und der mit einer Quernut versehen ist, die in der Freigabestellung im Bereich des Schlitzes zu liegen kommt, wobei durch geeignete Führungsmittel dafür Sorge getragen ist, dass der Verriegelungsbolzen sich nicht in der Bohrung verdreht. Die bekannte Klaue genügt hinsichtlich der Sicherungsfunktion allen Ansprüchen. Der zur Realisierung der einwandfreien Sicherungsfunktion erforderliche Aufwand ist allerdings erheblich und sprengt den Rahmen des kostenmäßig Vertretbaren in Fällen, in denen lediglich ein Herausfallen von Kettengliedern aus der Klaue bei unbelastetem Kettenstrang verhindert werden soll, d. h. in Fällen, in denen beispielsweise ein eine Klaue aufweisendes Gehänge vorübergehend auf dem Boden abgelegt wird. Für Fälle dieser Art ist in der DE-AS 1 775 813 vorgeschlagen worden, die die Tasche der Klaue beidseits des Schlitzes begrenzenden, hakenförmigen Teile des Grundkörpers mit Fenstern zur Aufnahme von elastischen Einsatzstücken zu versehen. Wenn diese Konstruktion nicht voll zu befriedigen vermochte, so deshalb, weil der sichere Sitz der Einsatzstücke nicht gewährleistet war. Entsprechendes gilt für eine andere, aus der US-A 4,330,990 bekannte Konstruktion, bei der als Sicherungselement eine die Tasche überbrückende Schraubenfeder verwendet wird, deren Enden in Aussparungen der Tasche gelagert sind und die beim gewollten Entfernen von Gliedern aus der Tasche und dem Schlitz auf Biegung beansprucht wird.

### Darstellung der Erfindung

Der Erfindung liegt die Aufgabe zugrunde, eine Klaue mit einer Sicherung zu schaffen, die einerseits kostengünstig herstellbar ist und die andererseits einwandfrei funktioniert. Gelöst wird die vorstehende Aufgabe bei einer Klaue der in Betracht gezogenen Art erfindungsgemäß dadurch, dass das elastisch verformbare Sicherungselement außerhalb der Tasche lediglich mit einem der Breite des Schlitzes entsprechenden Teilabschnitt seiner Länge in die Bewegungsbahn des in den Schlitz einzuführenden bzw. aus dem Schlitz zu entfernenden Kettengliedes ragt.

Die erfindungsgemäße Klaue bietet den Vorteil eines außerordentlich einfachen Aufbaus und einer Lagerung des Sicherungselementes, die dessen Verlust praktisch unmöglich macht, wobei es sich als besonders günstig erweist, wenn die das Sicherungselement aufnehmende Bohrung den Schlitz lediglich mit einem Teil ihres Umfangs schneidet und dies mit der Folge, dass der nicht zum Schlitz gerichtete Teil der Wand der Bohrung das Sicherungselement auf seiner dem Schlitz abgewandten Seite abstützt.

Weitere Merkmale und Einzelheiten der Erfindung ergeben sich aus den Unteransprüchen und der nachstehenden Beschreibung mehrerer in den beigefügten Zeichnungen dargestellter Ausführungsformen der Erfindung.

### Kurze Beschreibung der Zeichnungen

Es zeigen:
- Fig. 1: die Vorderansicht einer mit einem ersten Sicherungselement versehenen Verkürzungsklaue und eines kurzen Kettenstrangabschnittes,
- Fig. 2: einen Schnitt längs der Linie II - II in Figur 1,
- Fig. 3: einen Schnitt längs der Linie III - III in Figur 2,
- Fig. 4: einen der Figur 2 entsprechenden Schnitt beim Entfernen des Kettenstrangabschnittes aus der Tasche und dem Schlitz,
- Fig. 5: einen Schnitt längs der Linie V - V in Fig. 4,
- Fig. 6: die Teil-Vorderansicht der mit einem zweiten Sicherungselement versehenen Verkürzungsklaue gemäß Figur 1 bis 5 und dreier Kettenglieder,
- Fig. 7: einen Schnitt längs der Linie VII - VII in Figur 6,
- Fig. 8: eine Schnitt längs der Linie VIII - VIII in Figur 7,
- Fig. 9: einen der Figur 7 entsprechenden Schnitt beim Entfernen der Ketten- glieder aus ihrer gesicherten Position,
- Fig. 10: einen Schnitt längs der Linie X - X in Fig. 9,
- Fig. 11: die Teil-Vorderansicht der mit einem dritten Sicherungselement versehe- nen Verkürzungsklaue gemäß Figur 1 bis 5 samt Kettengliedern,
- Fig. 12: einen Schnitt längs der Linie XII - XII in Figur 11,
- Fig. 13: einen Schnitt längs der Line XIII - XIII in Figur 12,
- Fig. 14: einen der Figur 12 entsprechenden Schnitt beim Entfernen der Ketten- glieder aus ihrer gesicherten Position und
- Fig. 15: einen Schnitt längs der Linie XV - XV in Fig. 14.

### Wege zur Ausführung der Erfindung

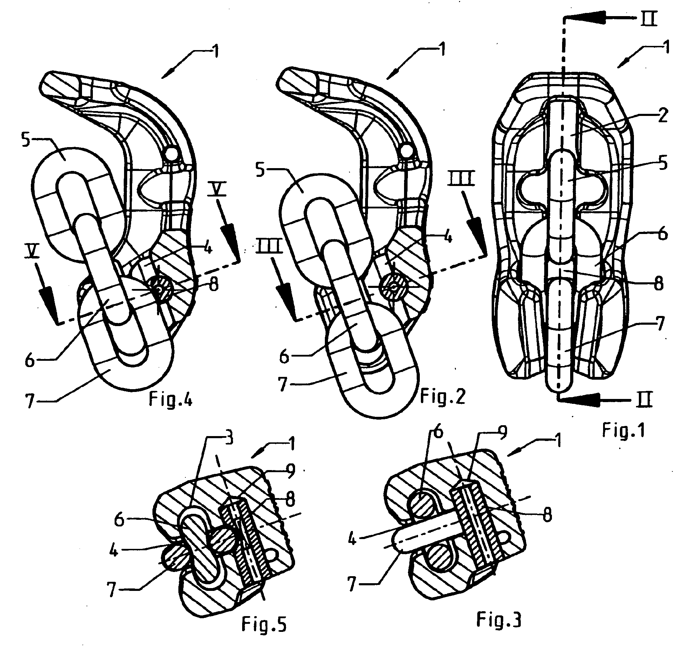

In den Figuren ist 1 der Grundkörper einer Verkürzungsklaue, die auch zum Verbinden zweier Kettenstränge genutzt werden kann. Der Grundkörper 1 besitzt einen oberen, mit einem Kreuzschlitz 2 versehenen ersten Teil und einen unteren, mit einer Tasche 3 und einem Schlitz 4 versehenen zweiten Teil. Normalerweise wird mit dem oberen Teil unverlierbar das Endglied eines ersten Kettenstranges verbunden, während der hier allein interessierende untere Teil zur Aufnahme eines lösund verkürzbaren Kettenstranges dient, von dem in den Figuren nur jeweils drei Glieder 5, 6 und 7 dargestellt sind. Von den vorgenannten drei Gliedern liegt das Glied 7 im Bereich des Schlitzes 4, während das Glied 6 in der Tasche 3 gehalten wird. Um ein ungewolltes Herausrutschen der Glieder 6 und 7 aus der unbelasteten, z. B. zusammen mit den Kettensträngen eines Gehänges abgelegten Klaue zu verhindern, ist die Klaue mit einem Sicherungselement 8 versehen, das aus einer in eine Bohrung 9 eingepressten Buchse aus federelastischem Kunststoff besteht. Wie aus Figur 3 erkennbar, liegt die Bohrung 9 in einer außerhalb der Tasche 3 gelegenen Zone des Grundkörpers 1, d. h. sie ist nur im Bereich des Schlitzes 4 auf einem Teil ihres Umfangs zum Schlitz 4 hin offen. Der partiell in den Schlitz 4 ragende Abschnitt des Sicherungselementes 8 wird folglich an seiner Rückseite abgestützt und das Sicherungselement bei der gewollten Entnahme der Kettenglieder 6 und 7 aus der Tasche 3 und dem Schlitz 4 nur auf Druck belastet, wie dies in Figur 4 und 5 gezeigt ist. Bei der Wahl der Abmessungen und des Materials des Sicherungselementes 8 ist den jeweiligen Gegebenheiten, d. h. insbesondere den Abmessungen bzw. dem Gewicht der Kettenglieder und der Klaue Rechnung zu tragen, wobei auch die Verwendung eines Vollkörpers an Stelle einer Buchse in Betracht kommt.

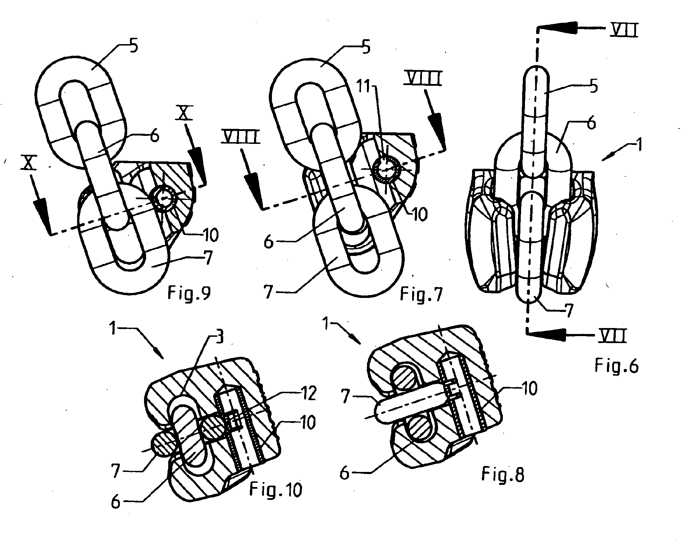

Anstelle eines Sicherungselementes 8 aus Gummi oder einem elastischen Kunststoff wird bei der Ausführungsform gemäß den Figuren 6 bis 10 ein Sicherungselement 10 verwendet, das von einer einen Längsschlitz 11 aufweisenden Hülse aus Metall gebildet wird, die im zum Schlitz 4 des Grundkörpers 1 offenen Bereich der Bohrung 9 mit einer federelastischen Zunge 12 versehen ist. Um einen sicheren Sitz der Hülse in der Bohrung 9 zu gewährleisten, ist der Rand der Bohrung am Einführende für die Hülse 10 leicht angestaucht.

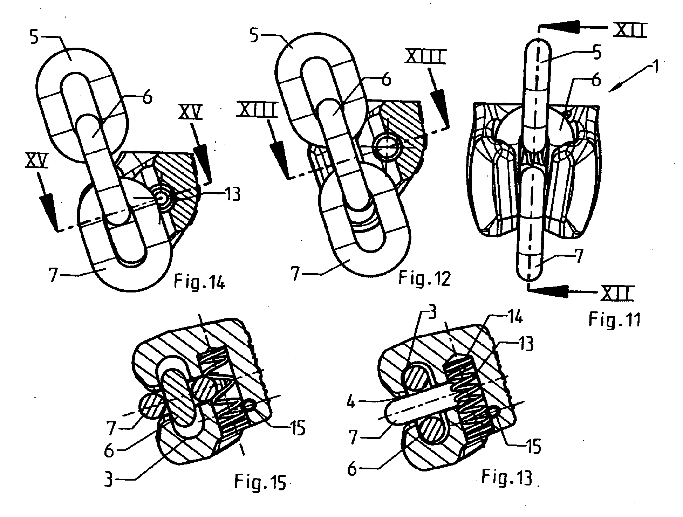

In den Figuren 11 bis 15 ist schließlich ein Sicherungselement 13 dargestellt, das aus einer in der Bohrung 9 gelagerten Schraubenfeder besteht. Zur Verhinderung von Längsverschiebungen der Feder in der Bohrung 9 dienen zwei Anschläge 14 und 15, von denen der eine vom Ende der Sacklochbohrung und der andere von einem in die Bohrung 9 ragenden Querstift gebildet wird. Wie der Figur 15 entnommen werden kann, wird die Feder nicht nach Art eines Trägers auf zwei Stützen - wie im Falle der US-A 4,330,990 - belastet, sondern es erfolgt lediglich eine Spreizung benachbarter Wendeln.

## Patentansprüche

1. Klaue, insbesondere Verkürzungsklaue für Kettenstränge mit einem Grundkörper (1), der eine mit einem Schlitz (4) versehene Tasche (3) zur Aufnahme eines Kettengliedes (6) aufweist, an das sich ein im Bereich des Schlitzes (4) zu liegen kommendes weiteres Kettenglied (7) anschließt, dem ein in einer den Schlitz (4) schneidenden Bohrung (9) angeordnetes Sicherungselement (8) zugeordnet ist, das ein ungewolltes Herausrutschen der in der Tasche (3) und im Schlitz (4) angeordneten Kettenglieder (6, 7) aus der Tasche (3) und dem Schlitz (4) verhindert, **dadurch gekennzeichnet, dass** das elastisch verformbare Sicherungselement (8; 10; 13) außerhalb der Tasche (3) lediglich mit einem der Breite des Schlitzes (4) entsprechenden Teilabschnitt seiner Länge in die Bewegungsbahn des in den Schlitz (4) einzuführenden bzw. aus dem Schlitz (4) zu entfernenden Kettengliedes (7) ragt.

2. Klaue nach Anspruch 1, **dadurch gekennzeichnet, dass** die das Sicherungselement (8; 10; 13) aufnehmende Bohrung (9) den Schlitz (4) lediglich mit einem Teil ihres Umfangs schneidet.

3. Klaue nach Anspruch 1 oder 2, **dadurch gekennzeichnet, dass** das Sicherungselement (13) durch auf seine Enden einwirkende Anschläge (14, 15) gegen Längsverschiebungen in der Bohrung (9) gesichert ist.

4. Klaue nach einem der Ansprüche 1 bis 3, **dadurch gekennzeichnet, dass** das Sicherungselement (8; 10; 13) in einer Sacklochbohrung (9) gelagert ist.

5. Klaue nach einem der Ansprüche 1 bis 4, **dadurch gekennzeichnet, dass** das Sicherungselement (8) als Buchse aus Gummi oder einem elastischen Kunststoff ausgebildet ist.

6. Klaue nach einem der Ansprüche 1 bis 4, **dadurch gekennzeichnet, dass** das Sicherungselement (13) als Schraubenfeder ausgebildet ist.

7. Klaue nach einem der Ansprüche 1 bis 4, **dadurch gekennzeichnet, dass** das Sicherungselement (10) aus einer einen Längsschlitz (11) aufweisenden, metallischen Hülse besteht.

8. Klaue nach Anspruch 7, **dadurch gekennzeichnet, dass** die das Sicherungselement (10) bildende Hülse mit einer, von einem Teil ihres Umfangs gebildeten, in den Schlitz (3) ragenden Zunge (12) versehen ist.

## Claims

1. Claw, in particular shortening claw for chain sections with a basic body (1) comprising a pocket (3) provided with a slot (4) for receiving a chain link (6) which is adjoined by a further chain link (7) which comes to rest in the region of the slot (4), to which further chain link 7 a securing element (8) arranged in a hole (9) intersecting the slot (4) is associated which prevents an undesired slipping out of the chain links (6, 7) arranged in the pocket (3) and in the slot (4) from the pocket (3) and the slot (4), **characterized in that** outside the pocket (3) the elastically deformable securing element (8; 10; 13) projects only with a partial section of its length corresponding to the width of the slot (4) into the movement path of the further chain link (7) to be inserted into the slot (4) or to be removed from the slot (4), respectively.

2. Claw according to claim 1, **characterized in that** the bore (9) receiving the securing element (8; 10; 13) only intersects the slot (4) with a portion of its circumference.

3. Claw according to claim 1 or 2, **characterized in that** the securing element (13) is secured against longitudinal displacements in the bore (9) by stops (14, 15) acting on its ends.

4. Claw according to one of claims 1 to 3, **characterized in that** the securing element (8; 10; 13) is supported in a blind hole bore (9).

5. Claw according to one of claims 1 to 4, **characterized in that** the securing element (8) is designed as a bushing of rubber or elastic plastics.

6. Claw according to one of claims 1 to 4, **characterized in that** the securing element (13) is designed as a coil spring.

7. Claw according to one of claims 1 to 4, **characterized in that** the securing element (10) consists of a metallic sleeve comprising a longitudinal slot (11).

8. Claw according to claim 7, **characterized in that** the sleeve forming the securing element (10) is provided with a tongue (12) formed by a portion of its circumference and projecting into the slot (3).

## Revendications

1. Griffe, en particulier griffe de raccourcissement pour des tronçons de chaîne, avec un corps de base (1), présentant une poche (3), munie d'une fente (4), pour recevoir un maillon de chaîne (8), auquel se raccorde un autre maillon de chaîne (7), venant se placer dans la zone de la fente (4), maillon de chaîne (7) auquel est associé un élément de sécurité (8) disposé dans un perçage (9) coupant la fente (4), l'élément de sécurité (8) empêchant un échappement intempestif, hors de la poche (3) et de la fente (4), des maillons (8, 7) disposés dans la poche (3) et dans la fente (4), **caractérisée en ce que** l'élément de sécurité (8 ; 10 ; 13) déformable élastiquement, hors de la poche (3), pénètre seulement d'un tronçon partiel, correspondant à la largeur de la fente (4), de sa longueur, dans la trajectoire de déplacement du maillon (7) à introduire dans la fente (4) ou à enlever de la fente (4).

2. Griffe selon la revendication 1, **caractérisée en ce que** le perçage (9) recevant l'élément de sécurité (8 ; 10 ; 13) coupe la fente (4) seulement avec une partie de sa périphérie.

3. Griffe selon la revendication 1 ou 2, **caractérisée en ce que** l'élément de sécurité (13) est assuré contre des déplacements longitudinaux dans le perçage (9) au moyen de butées (14, 15) agissant sur ses extrémités.

4. Griffe selon l'une des revendications 1 à 3, **caractérisée en ce que** l'élément de sécurité (8 ; 10 ; 13) est logé dans un perçage en trou borgne (9).

5. Griffe selon l'une des revendications 1 à 4, **caractérisée en ce que** l'élément de sécurité (8) est réalisé sous forme de douille en caoutchouc ou en une matière synthétique élastique.

6. Griffe selon l'une des revendications 1 à 4, **caractérisée en ce que** l'élément de sécurité (13) est réalisé sous forme de ressort hélicoïdal.

7. Griffe selon l'une des revendications 1 à 4, **caractérisée en ce que** l'élément de sécurité (10) est composé d'une douille métallique, présentant une fente longitudinale (11).

8. Griffe selon la revendication 7, **caractérisée en ce que** la douille formant l'élément de sécurité (10) est munie d'une languette (12) formée par une partie de sa périphérie, pénétrant dans la fente (3).
